# EUROPEAN PATENT SPECIFICATION

(11) **EP 0 448 615 B1**
(45) Date of publication and mention of the grant of the patent: **16.03.1994**
(21) Application number: 90900875.7
(22) Date of filing: 11.12.1989
(51) Int. Cl.: G01P 3/68, G01B 11/04, G01S 11/00

(54) **A METHOD OF OPTICALLY DETERMINING THE SPEED OF A SURFACE**
VERFAHREN ZUR OPTISCHEN BESTIMMUNG DER GESCHWINDIGKEIT EINER FLÄCHE
METHODE DE DETERMINATION OPTIQUE DE LA VITESSE D'UNE SURFACE

(30) Priority: 13.12.1988 FI 885758
(43) Date of publication of application: 02.10.1991
(73) Proprietor: VALTION TEKNILLINEN TUTKIMUSKESKUS, 02150 Espoo 15 (FI)
(72) Inventor: ELSILÄ, Martti, SF-90570 Oulu (FI); PIIRONEN, Timo, SF-90540 Oulu (FI); JOKINEN, Hannu, SF-90460 Oulunsalo (FI)
(74) Representative: Grünecker, Kinkeldey, Stockmair & Schwanhäusser Anwaltssozietät
(86) International application number: FI8900231
(87) International publication number: WO9007123

(56) References cited:
- DE-A- 3 539 793
- DE-C- 3 110 828
- US-A- 3 890 462
- US-A- 4 096 525
- US-A- 4 162 509
- US-A- 4 679 076

## Description

This invention relates to a method of optically determining the speed of a surface by means of picture rows successive in time, the picture rows being obtained from an array of photodetectors.

A prior art (US-A-3 890 462) method as indicated in the pre-characterizing part of claim 1, examines successive video images produced by a matrix camera. This method is capable of measuring the direction and the speed of movement in both, the horizontal and the vertical directions. The differences of adjacent or successive gray scale differences are counted.

In a prior art method, the displacement of a surface during the time interval between the imaging of two picture rows successive in time is calculated by determining the correlation between the two picture rows. The speed of the surface can be determined in this way. This correlation method requires that the surface to be imaged comprises dots relatively clearly distinguishable from the surroundings, otherwise the speed cannot be determined reliably. The method is not particularly applicable to the determination of the speed of surfaces yielding picture rows in which the intensities of the picture elements vary seemingly arbitrarily.

The object of the present invention is to provide a method of determining the speed of nearly any surface which is patterned at least to some extent.

Such a patterned surface may be, e.g., a wooden surface, a metal surface, a surface of a road, a cloth surface, or other similar surface yielding picture rows in which the intensities of the picture elements vary at least with sufficient magnification.

Determination of the speed of a surface comprises digitizing the analog signals from the array of photodetectors and storing the digitized picture rows successive in time, whereby according to the invention, the picture rows arranged side by side can be assumed to form a two-dimensional picture in the space-time domain; and determining the slope or a corresponding quantity of a line defined in said space-time domain picture by each picture element in the picture row having an intensity different from that of their surroundings to obtain a value proportional to the speed of the surface.

Preferably, the determination of the value of the slope or a corresponding quantity of the line comprises the determination of gradients in the direction of the space-axis and the time-axis for each picture element in the picture row as well as the determination of the ratio of the space-axis and time-axis gradients of each picture element. The measuring resolution can be increased manyfold by determining the average value of the values calculated for the picture elements of each picture row. To improve the reliability of the result it is possible, if desired, to select the picture elements to be averaged before the averaging operation, e.g., in such a manner that the value calculated for each picture element on the basis of its gradients is compared with a preset value. In this way picture elements which are hardly distinguishable from the surroundings will not affect the calculation result.

The basic idea of the method of the invention is that digitized picture rows obtained from the detector array are stored in a memory to form a picture in which picture elements having an intensity different from that of the surroundings form lines the slope of which is proportional to the speed of the surface. According to the invention, the slope of the lines is measured digitally, e.g., by convoluting the picture so as to obtain space-axis and time-axis gradients, the slope being obtained as the ratio of these gradients. In this way the speed or a value proportional to it is obtained for each picture element. As mentioned above, the measuring resolution can thereby be increased manyfold by averaging the speed values of each picture row. The selection of the values to be averaged can be controlled by summing only those values the square sum of which exceeds a predetermined value. In this way the values of those picture elements only which are contained in some of the lines of the picture are averaged.

The method of the present invention is applicable within a wide speed range and its measuring resolution is sufficient for the method to be applied to the measuring of the length of a body as well. In the method, the direction of the surface to be measured is also taken into account as well as the possible stopping of its movement. The method can be realized in parallel with image processing devices at high processing rate.

In the following the method of the invention will be described in greater detail with reference to the attached drawing, wherein
Figure 1 is a schematic view of a surface to be imaged and a photodetector array imaging it;
Figure 2 shows a two-dimensional picture formed according to the invention; and
Figure 3 shows the flow diagram of the method of the invention.

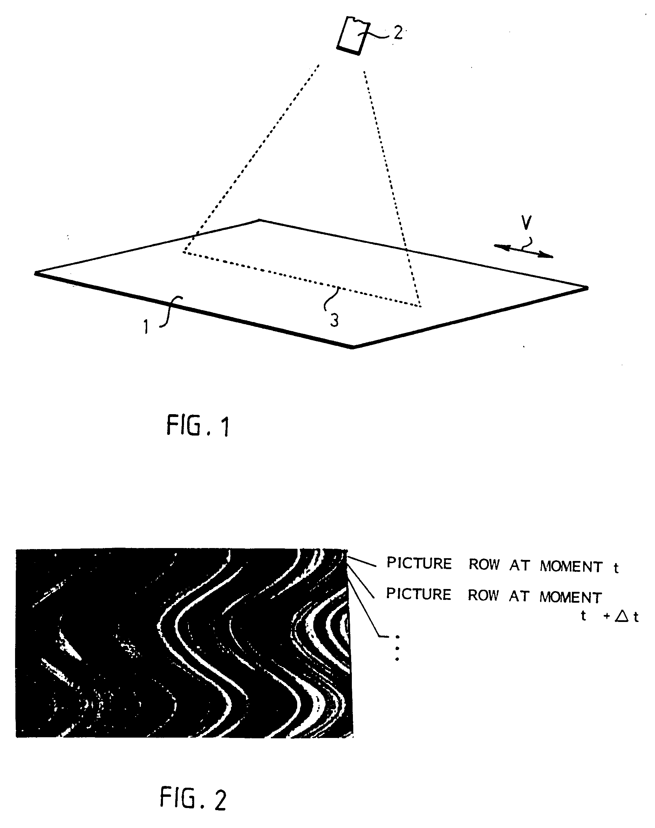

Figure 1 shows schematically a moving surface 1 which is being imaged with a photodetector array 2. In practice, the photodetector array may be, e.g., a video camera, an array camera or even an array of separate photodetectors. The photodetector array 2 images a row 3 of picture elements from the moving surface 1. The direction of movement of the surface 1 is indicated with a to-and-fro arrow V in Figure 1.

Figure 2 shows a two-dimensional picture in the space-time domain, formed by means of the arrangement of Figure 1. During imaging, the surface 1 of Figure 1 has moved to and fro in the horizontal plane of the figure. The picture of Figure 2 has been formed by superimposing successive picture rows from the detector array 2 one upon another in such a manner that a picture row obtained at a moment t is disposed at the upper edge of the picture, a picture row obtained somewhat later at a moment t + Δt is disposed below it, etc. As appears from Figure 2, picture elements with an intensity different from that of the surroundings define lines in the picture when they are displaced in the direction of movement with time (to the left at the top of Figure 2). According to the invention, the speed of the surface 1 is determined by determining the slope or a corresponding quantity of these lines, whereby the speed of the picture element can be easily calculated from this value.

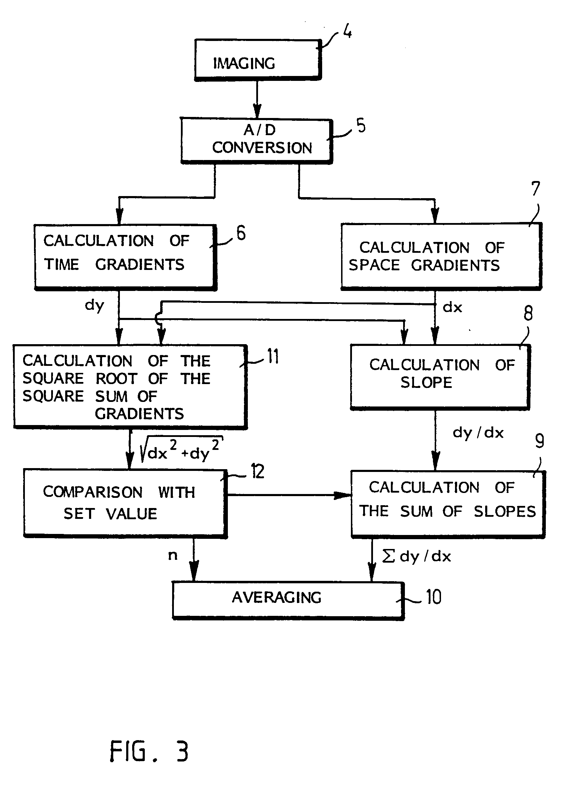

Figure 3 shows by way of example a flow diagram of the realization of the method of the invention. The first step 4 of Figure 3 comprises imaging one picture row by means of the photodetector array 2. At the following step 5, this picture row is digitized so that each picture element in the picture row is given a digital value corresponding to its intensity. At the following steps 6 and 7, the digitized picture rows successive in time are stored by means of shift registers so that two entities comprising a desired number of picture rows are available in each particular case. Both of these entities can be assumed to form the same portion of the picture of Figure 2. At step 6, the time-axis gradient, or the y-axis gradient, is determined from this picture for each picture element. Correspondingly, the space-axis gradient, or the x-axis gradient, is determined for each picture element at step 7. These gradients can be determined, e.g., by means of so called convolution masks. Determination of the gradients of picture elements with convolution masks is described, e.g., in "Handbook of Pattern Recognition and Image Processing", Academic Press, Inc., 1986, ed. Tzay Y. Young and King-Sun Fu, p. 192-194, 216 and 217.

At step 8 the slope of the picture element is determined as the ratio dy/dx of the time gradient dy and the space gradient dx obtained from the steps 6 and 7 for each picture element. The data thus obtained on the speed of the surface is already sufficient for certain applications. However, greater resolution is achieved by calculating the average value of the slopes of the picture elements in one and the same picture row. The summing operation is effected at step 9 and the averaging at step 10. At step 11, the square root of the square sum of the gradients dy and dx is determined for each picture element in order to be able to exclude from the slope values to be summed those which are not contained in any of the lines visible in the picture of Figure 2 and which therefore mainly contain arbitrary information. At step 12, the square root of the square sum is then compared with a preset value. The calculation of the slopes to be summed at step 9 is controlled on the basis of the result of this comparison. In Figure 3, this is illustrated by the arrow between the steps 12 and 9. In this way only the slopes of picture elements contained in the lines are summed at step 9. Data on the number n of acceptable picture elements is applied from step 12 to step 10, which has also received data on the sum of acceptable slopes from step 9. Accordingly, the sum of the selected slopes Σ dy/dx can be divided by the number n of the summed slopes, thus obtaining the average value of the slopes of the line. This average value defines the speed very accurately at the imaging moment of one particular picture row.

The practical realization of the method of the invention through the steps of Figure 3, for instance, can be carried out by digital VLSI circuits. So the A/D conversion step 5, for instance, can be realized with a TDC1048 circuit, manufacturer TRW Inc. The shift register and gradient calculation operations of steps 6 and 7 can be carried out, e.g., with a PDSP16488 circuit, manufacturer Plessey Semiconductors. The slope calculation and the calculation of the square root of the square sum of the gradients in step 8 can be carried out with a pythagorean processor of the type PDSP16330, manufacturer Plessey Semiconductors, whereby the other output is not the slope dy/dx but a corresponding angle or atan (dy/dx). The summing of the slope values at step 9 can be realized with a PDSP1601 circuit, manufacturer Plessey Semiconductors. The comparison operation and the counting of the number of acceptable values at step 12 can be realized with a comparator and a counter formed by conventional MSI components. Calculation of the final average value at step 10 can be carried out most simply by means of a microcomputer programmed for this purpose. The microcomputer thereby reads the sum of the slopes of the picture row and the number of the summed slope values and calculates their quotient, that is, the average value of the slopes of the line. This average value is directly proportional to the speed of the surface to be measured.

The method of the invention has been described above by way of example by means of one specific embodiment. So only one way of determining the slope or a corresponding quantity of a line drawn by each element in a picture row in the space-time domain has been disclosed. Being simple, this way is to be preferred; however, it is to be understood that the slopes or corresponding quantities of lines occurring in a formed two-dimensional picture can be determined in other ways as well, for instance, mathematically or by image processing techniques.

## Claims

1. A method of optically determining the speed of a surface (1) by means of picture rows (3) successive in time, the picture rows being obtained from an array of photodetectors (2) arranged in parallel with the direction of the movement, which method comprises:
- digitizing (5) the analog signals from the array of photodetectors (2), and
- storing the digitized picture rows successive in time, whereby the picture rows are arranged side by side,
**characterized in that**
the picture rows can be assumed to form a two-dimensional picture in the space-time domain, and that the method further comprises:
- determining (8) the slope or a corresponding quantity of a line defined in said space-time domain picture by each picture element in the picture row having an intensity different from that of their surroundings to obtain a value proportional to the speed of the surface (1).

2. A method of claim 1, characterized in that the determining of the value of the slope or a corresponding quantity of the line comprises:
- determining (6,7) space-axis and time-axis gradients for each picture element in the picture row,
- determining (8) the ratio of the space-axis and time-axis gradients of each picture element;
- selecting (12) the picture elements defining the lines by comparing for each picture element a calculated value depending on the gradients of the picture element with a preset value, and
- averaging (10) determined gradient ratios of the selected picture element in one and the same picture row.

## Patentansprüche

1. Verfahren zur optischen Bestimmung der Geschwindigkeit einer Fläche (1) mit Hilfe von zeitlich aufeinanderfolgenden Bildreihen (3), die von einer Anordnung von Fotodetektoren (2) erhalten werden, die parallel zur Bewegungsrichtung angeordnet sind; wobei das Verfahren aufweist:
- Digitalisieren (5) der Analogsignale von der Anordnung von Fotodetektoren (2) und
- Speichern der digitalisierten, zeitlich aufeinanderfolgenden Bildreihen, wodurch die Bildreihen Seite an Seite angeordnet werden,
**dadurch gekennzeichnet,** daß
die Bildreihen zur Bildung eines zweidimensionalen Bildes in dem Raum-Zeit-Bereich angenommen werden können und das Verfahren weiterhin aufweist:
- Bestimmen (8) der Neigung oder einer entsprechenden Größe einer Geraden, die in dem Raum-Zeit-Bereichs-Bild durch jedes Bildelement in der Bildreihe definiert ist, das eine sich von seinen Umgebungen unterscheidende Intensität hat, um einen der Geschwindigkeit der Fläche (1) proportionalen Wert zu erhalten.

2. Verfahren nach Anspruch 1, **dadurch gekennzeichnet,** daß die Bestimmung des Wertes der Neigung oder einer entsprechenden Größe der Geraden aufweist:
- Bestimmen (6, 7) von Gradienten einer Raumachse und einer Zeitachse für jedes Bildelement in der Bildreihe,
- Bestimmen (8) des Verhältnisses der Gradienten der Raumachse und der Zeitachse eines jeden Bildelementes,
- Auswählen (12) der Bildelemente, die die Geraden definieren, durch Vergleichen eines berechneten Wertes für jedes Bildelement in Abhängigkeit von den Gradienten des Bildelementes mit einem voreingestellten Wert, und
- Mitteln (10) der bestimmten Gradientenverhältnisse des ausgewählten Bildelementes in ein und derselben Bildreihe.

## Revendications

1. Procédé pour déterminer optiquement la vitesse d'une surface (1) au moyen de rangées d'images (3) qui se succèdent dans le temps, les rangées d'images étant obtenues à partir d'un réseau de photodétecteurs (2) disposés parallèlement à la direction de déplacement, procédé qui comprend :
- la numérisation (5) des signaux analogiques provenant du réseau de photodétecteurs (2), et
- la mémorisation des rangées d'images numérisées qui se succèdent dans le temps, de sorte que les rangées d'images sont disposées côte-à-côte,
caractérisé en ce que
l'on peut considérer que les rangées d'images forment une image bidimensionnelle dans le domaine espace-temps, et en ce que le procédé comprend en outre :
- la détermination (8) de la pente ou d'une quantité correspondante d'une ligne définie dans ladite image du domaine espace-temps par tous les éléments d'image dans la rangée d'images qui ont une intensité différente de celle de leurs environs pour obtenir une valeur proportionnelle à la vitesse de la surface (1).

2. Procédé selon la revendication 1, caractérisé en ce que la détermination de la valeur de la pente ou d'une quantité correspondante de la ligne comprend :
- la détermination (6, 7) des gradients suivant l'axe des temps et suivant l'axe des espaces pour chaque élément d'image dans la rangée d'images,
- la détermination (8) du rapport des gradients suivant l'axe des temps et suivant l'axe des espaces pour chaque élément d'image,
- la sélection (12) des éléments d'images qui définissent les lignes par comparaison pour chaque élément d'image d'une valeur calculée en fonction des gradients de l'élément d'image avec une valeur prédéterminée, et
- le calcul de la moyenne (10) des rapports de gradients déterminés des éléments d'images sélectionnés dans une seule et même rangée d'images.
